Europäisches Patentamt

European Patent Office

Office européen des brevets

(19)

(11) Publication number: **0 219 165 B1**

(12) # EUROPEAN PATENT SPECIFICATION

(45) Date of publication of patent specification: **31.07.91**  (51) Int. Cl.⁵: **A01F 15/14**

(21) Application number: **86201743.1**

(22) Date of filing: **08.10.86**

---

(54) Twine wrapping apparatus in a round baler.

---

(30) Priority: **16.10.85 US 787955**
**16.10.85 US 787880**

(43) Date of publication of application:
**22.04.87 Bulletin 87/17**

(45) Publication of the grant of the patent:
**31.07.91 Bulletin 91/31**

(84) Designated Contracting States:
**DE FR GB IT**

(56) References cited:
**EP-A- 0 169 277**
**FR-A- 2 362 575**
**FR-A- 2 366 786**
**FR-A- 2 414 295**
**FR-A- 2 457 636**

(73) Proprietor: **FORD NEW HOLLAND, INC. (a
Delaware corp.)
500 Diller Avenue
New Holland Pennsylvania 17557(US)**

(72) Inventor: **Wagstaff, Robert A.
2590 Ponderosa Drive
Lancaster, PA 17601(US)**
Inventor: **Glass, Emmett F.
115 South 11th Street
Akron, PA 17501(US)**

(74) Representative: **Vandenbroucke, Alberic T.J.
FORD NEW HOLLAND N.V. Leon Claeysstraat
3A
B-8210 Zedelgem(BE)**

---

## Description

This invention relates generally to roll baling machines typically referred to as round balers which form cylindrical roll bales of crop material and, in particular, to a twine wrapping apparatus for such roll baling machines.

In the type of round baler disclosed in U.S. Patent No. 4,119,026 where a series of conveyor belts or rollers constitute the bale forming mechanism, it has been found desirable to mount apparatus for wrapping bales with twine in a position to feed twine through a gap between two of the adjacent conveyor belts or rollers. Such a twine wrapping apparatus is disclosed in U.S. Patent No. 4,133,258 and includes a twine dispensing member which is movable in a linear path parallel to the axis of the bale being wrapped. Various devices are disclosed in U.S. Patent No. 4,133,258 for moving the twine dispensing member in this linear path. These devices include a reversible screw spindle, a gear rack and pinion combination, and a double chain and sprocket arrangement. A common drawback of all these devices is that they are too costly.

Therefore, it is an object of the present invention to provide a twine wrapping apparatus for the general type of round baler disclosed in U.S. Patent No. 4,119,026 which is more economical than the apparatus of U.S. Patent No. 4,133,258.

According to the invention, a roll baling machine is provided which comprises :

- a pair of bale forming means defining at least in part a bale forming chamber and operable to at least contribute in forming crop material into roll bales; said bale forming means further also defining a generally transversely extending gap therebetween; and

- an apparatus for wrapping roll bales with twine; said apparatus including a dispensing member mounted for movement generally across the width of said gap to dispense twine therethrough for applying it onto a bale in the bale chamber, and which is characterized in that a stationary guide means is disposed to guide the twine dispensed by the dispensing means into the gap between said pair of bale forming means.

Preferably the stationary guide means is separate from the twine dispensing member and extends generally parallel to the transverse gap and generally in the vicinity and across the width thereof. Said guide means may comprise a bar connected between opposed side walls of the machine. However, preferably said guide means comprises first and second generally parallel bars connected between opposed side walls of the machine; said first and second bars being spaced apart to define a further gap therebetween which generally overlies said gap between said pair of bale forming means, and the arrangement being such that twine is dispensed through said further gap while engaging one of said bars for being guided thereby through said gap between said bale forming means.

The twine dispensing member preferably is mounted for pivotal movement generally in the vicinity of said guide means and may comprise an arm which is pivotally mounted at one end on a frame portion of the baling machine and a twine dispensing end opposite to said one end; said arm being drivingly coupled to an actuator means which is operable to pivot the arm back-and-forth so as to move its twine dispensing end along an arcuate path generally in the vicinity of and across the width of said guide means.

The gap between said pair of bale forming means through which twine is applied upon a bale in the bale chamber also may form the crop inlet opening to said bale chamber although the alternative arrangement is preferred in which said gap is separate from the crop inlet.

Preferably, the bale forming means defining said gap are formed by a pair of rollers which form part of a plurality of bale forming rollers which together define the bale forming chamber and are operable to form crop material into roll bales; said pair of rollers defining said gap being positioned generally in the upper half of the bale forming chamber.

The baling machine according to the invention further also comprises clamp means for clamping the twine when the twine dispensing member is in a rest position and trip means connected to the clamp means; said trip means being actuated by engagement with the dispensing member during its dispensing movement to release the twine from said clamp means. The clamp means and the trip means are spaced apart across the width of the baling machine and the twine dispensing member has its rest position inbetween the clamp means and the trip means and is movable initially in a direction away from the clamp means and towards and past the trip means and subsequently in the opposite direction across substantially the full width of the baling machine. The arrangement is such that, during the initial movement of the dispensing member, the clamp means holds the twine so as to draw a length of twine between said clamp means and the dispensing member whereafter, and as the dispensing member engages the trip means, said twine is released from the clamp means so as to permit said twine to commence wrapping around a bale in the bale chamber; said wrapping being continued during the return movement of the twine dispensing member. A guard plate is associated with the clamp means to prevent the twine from getting tangled up in the clamp means during the return movement of the dispensing member past said clamp means. The twine dispensing means is finally movable back to the rest position in the direction of the initial movement and the arrangement is such that, during said final movement, the twine is snapped in the clamp means. Preferably, the clamp means is provided generally proximate to one transverse side of the baling machine and the trip means is provided generally in the vicinity of the opposite transverse side of the baling machine; the trip means and the clamp means being interconnected by a control rod. The clamp means is movable between a closed position to clamp the twine and an open position to release the twine. Also, the trip means is movable from a trip position in which the clamp means is in the closed position to an actuating position upon engagement with the twine dispensing member during its initial movement away from the clamp means to move said clamp means from said closed position to said open position.

The trip means additionally is also movable from said trip position to a non-actuating position upon engagement with the twine dispensing member during its return movement in the direction toward the clamp means; the coupling of the trip means to the clamp means including a one-way lost motion arrangement so as to permit said movement of the trip means from its trip position to its non-actuating position without causing actuation of the clamp means.

The advantages of this invention will become apparent upon consideration of the following detailed disclosure of the invention, especially when taken in conjunction with the accompanying drawings wherein :

Fig. 1 is a side elevation view of a round baler incorporating the twine wrapping apparatus of the present invention;

Fig. 2 is an enlarged view of the twine wrapping apparatus of the present invention taken along lines 2-2 in Fig. 1;

Fig. 3 is a sectional view taken along lines 3-3 in Fig. 2;

Fig. 4 is a further enlarged sectional view taken along lines 4-4 in Fig. 3;

Fig. 5-11 are schematic views taken from Fig. 2 at different stages during the operation of the twine wrapping apparatus of the present invention; and

Fig. 12 is a further enlarged sectional view taken along lines 12-12 in Fig. 2.

The terms "transverse", "forward", "rearward", "left" and "right" etc. used in connection with the baling machine and/or components thereof are determined with reference to the direction of forward operative travel of the machine but should not be construed as limiting.

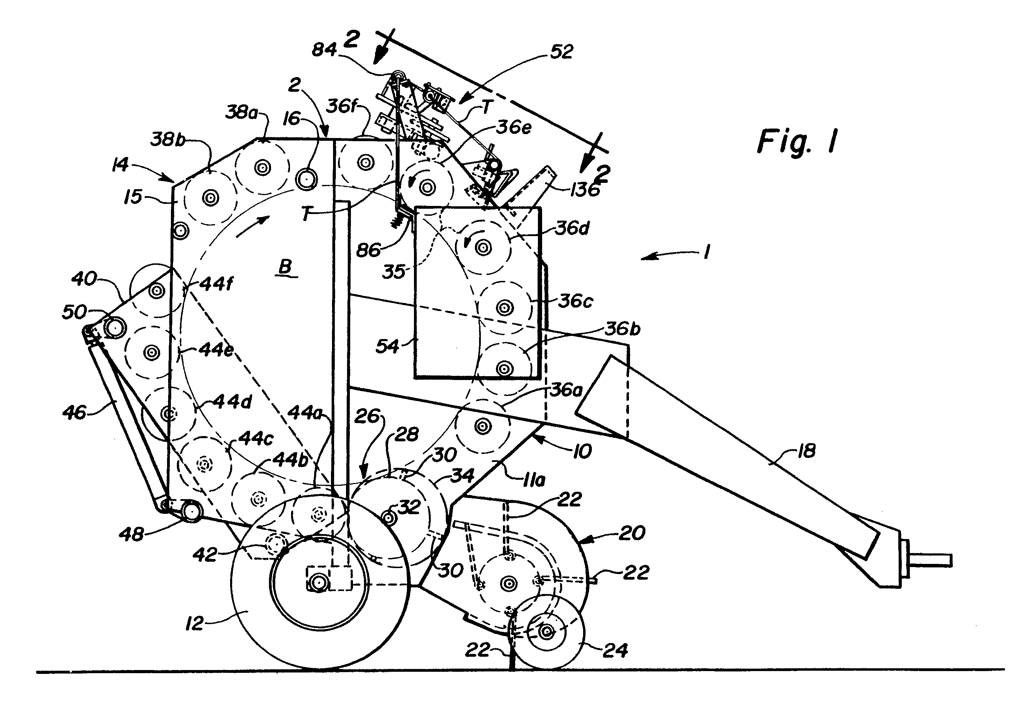

Referring now to the drawings and, particularly to Fig. 1, a round baler 1 includes a frame 2 consisting of a base frame portion 10 supported by a pair of wheels 12 and an auxiliary frame portion or tailgate 14 pivotally connected to the base frame portion 10 by stub shafts 16 mounted in suitable bearings. A tongue 18 is provided on the forward end of the base frame portion 10 for connection to a towing vehicle such as a tractor (not shown).

A pickup 20 is attached to the base frame portion 10 and includes a series of fingers 22 movable in a path to lift crop material from the ground. The pickup 20 is supported by a wheel 24. A feeder drum 26 is rotatably mounted on the base frame portion 10 and includes a cylinder 28 and a plurality of fingers 30 mounted on a shaft (not shown) that is offset relative to the shaft 32 on which the cylinder 28 is mounted. As the cylinder 28 is rotated on the shaft 32, the fingers 30 reciprocate through openings in the cylinder 28 so that the tips of the fingers 30 follow a path designated 34.

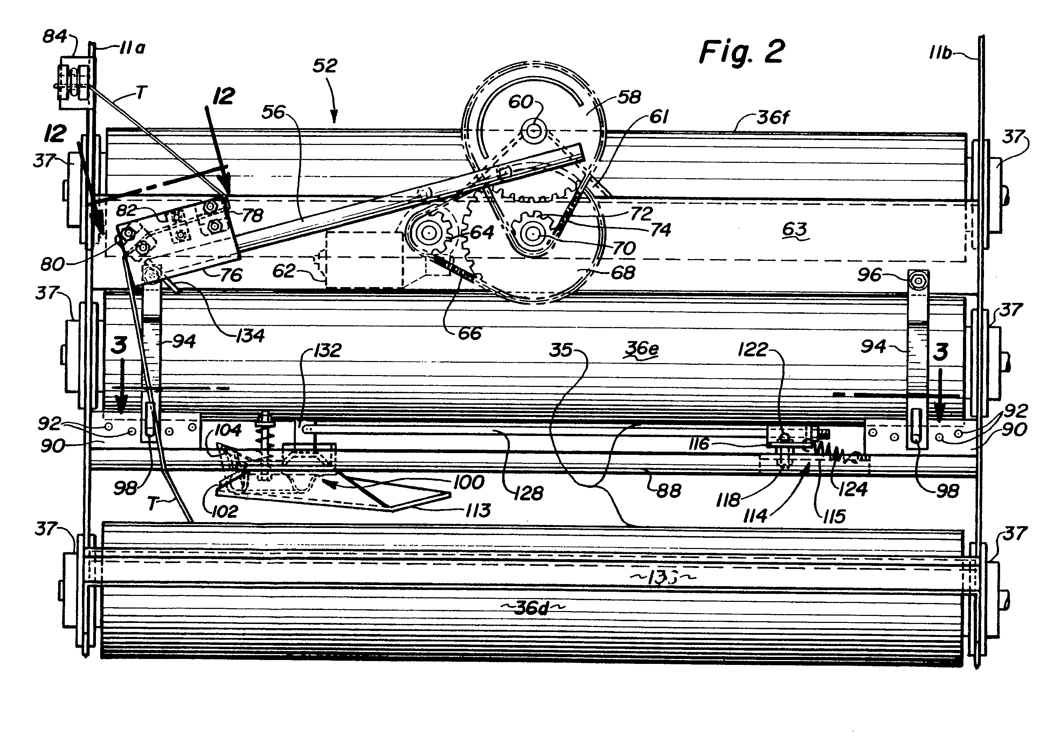

The round baler 1 includes a set of conveying members or rollers 36a through 36f fixedly journalled in bearings 37 shown in Fig. 2 mounted in the sidewalls 11a,11b of the base frame portion 10. Another set of conveying members or rollers 38a and 38b is fixedly journalled in similar bearings mounted in sidewalls 15 of the tailgate 14. A pair of arms 40 are pivoted at one end on stub shafts 42 mounted in the tailgate 14. A further set of conveying members or rollers 44a through 44f is rotatably carried by the arms 40. A hydraulic cylinder 46 is pivoted at its lower end to a beam 48 extending between the sidewalls 15 of the tailgate 14 and at its upper end to a beam 50 connected between the arms 40. The sets of rollers 36a-36f, 38a-38b and 44a-44f extend transversely of the frame 2 and constitute mechanism for forming crop material into roll bales. Although it is not essential to the present invention, the bale forming operation of the round baler 1 will be understood from European Patent Application No. 0.161.726 and incorporated herein by reference.

A twine wrapping apparatus 52, according to the present invention, is carried on the base frame portion 10 near the top thereof and a supply box 54 containing twine is mounted on the sidewall 11a of the base frame portion 10. As seen in Fig. 2, the twine wrapping apparatus 52 includes a twine dispensing member such as arm 56 fixed to a large diameter sprocket 58 which is rotatably mounted on a shaft 60 carried by a plate 61 on the base frame portion. An electric motor 62 is provided on a cross beam 63 of the base frame portion 10 to drive a small diameter sprocket 64 which is connected by a chain 66 to another large diameter sprocket 68 fixed on another shaft 70. Another small diameter sprocket 72 is also fixed on the shaft 70 and is connected to large diameter sprocket 58 by another chain 74. The electric motor 62 is connected by a switch (not shown) to a suitable power source (also not shown) for effecting pivoting movement of the arm 56 via the small diameter sprockets 64 and 72, the large diameter sprockets 58 and 68, and the chains 66 and 74. It should be noted that the large diameter sprockets 58, 68 serve to reduce the output speed of the electric motor 62 to a desired level.

A rectangular plate 76 attached to the arm 56 supports a pair of spaced guides 78, 80 and a clamp 82 located between the guides 78, 80. See Figs. 2 and 12. Another guide 84 and another clamp 86 are mounted on the sidewall 11a of the base frame portion 10. Twine T extends upwardly from the supply box 54 through the clamp 86 and the guide 84, and then through the guide 78, the clamp 82 and guide 80. The clamps 82, 86 are adjustable and cause the twine T to be sufficiently tensioned to prevent tangling thereof. Additionally, the clamp 82 prevents the twine T from being pulled back through the guides 78, 80 during pivoting movement of the arm 56.

A stationary twine guide member such as bar 88 extends between and is connected to the sidewalls 11a, 11b of the base frame portion 10. The bar 88 extends transversely of the frame 2 and is arranged with its longitudinal axis parallel to the longitudinal axes of the rollers 36a-36f, 38a-38b and 44a-44f and thus also to the transverse dimension of the gap 35 between the rollers 36d and 36e. The bar 88 supports plates 90 adjacent its ends which have holes 92 formed therein. Brackets 94 are attached to the cross beam 63 by bolts 96 and carry pins 98 which are extendable through selected holes 92 in the plates 90. The pins 98 prevent the twine T from being wrapped too near the ends of a bale and also prevent the twine T from getting caught between the ends of the rollers 36d, 36e and the sidewalls 11a,11b of the base frame portion 10. The pins 98 are selectably positionable in any of the holes 92 in the associated plates 90 by lifting the pins 98 to deflect the brackets 94, and then rotating the brackets 94 about the bolts 96 to another position to reseat the pins 98 in the selected holes 92.

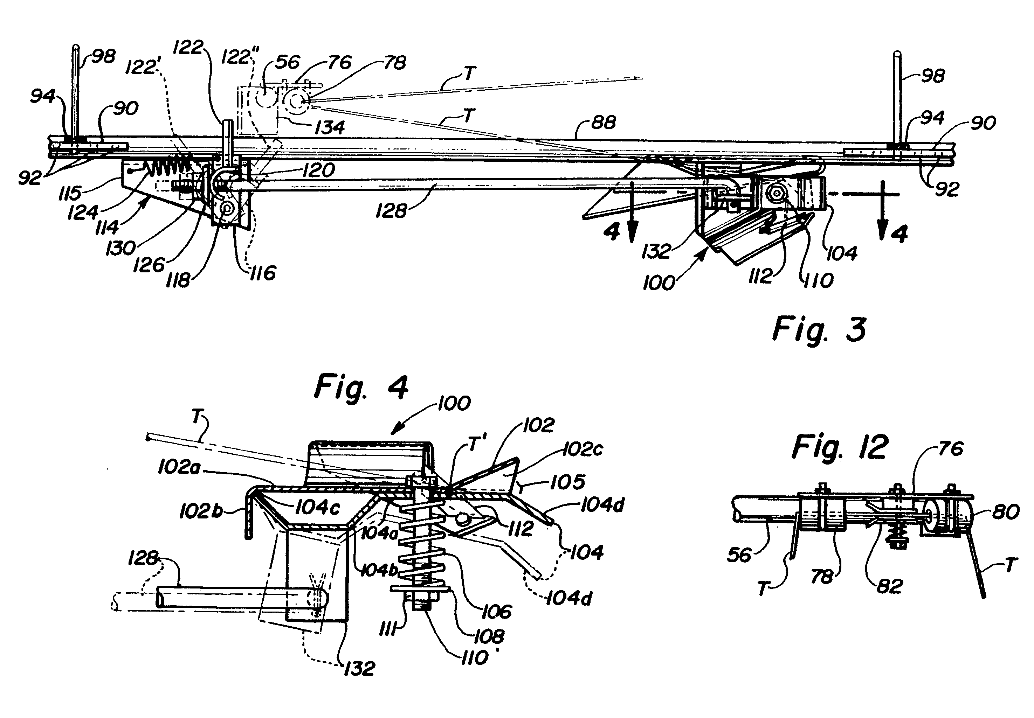

A clamp assembly 100 is mounted on the bar 88 and includes a jaw member 102 which is stationary and a jaw member 104 which is movable. The jaw member 104 is biased toward the jaw member 102 by a spring 106 which is held in compression between the jaw member 104 and a washer 108 provided on a bolt 110 as seen in Fig. 4. A nut 111 is threaded onto the bolt 110 and is adjustable therealong to vary the compression of spring 106. The jaw member 102 includes an intermediate portion 102a, an end portion 102b disposed substantially perpendicular to the intermediate portion 102a, and another end portion 102c disposed at an obtuse angle to the intermediate portion 102a. The jaw member 104 includes an intermediate portion 104a which normally contacts the intermediate portion 102a of the jaw member 102, an end portion 104b having an edge 104c that contacts the jaw member 102 at the juncture between the intermediate portion 102a and the end portion 102b, and another end portion 104d which is disposed at an obtuse angle to the intermediate portion 104a. The end portions 102c and 104d of the jaw members 102, 104 form a mouth 105 therebetween for receiving the twine T which is clamped as shown at T' in Fig. 4 between the intermediate portions 102a, 104a of the jaw members 102, 104. A knife 112 is mounted on the clamp assembly 100 below the mouth 105 in a fixed position to sever the twine T as it is being clamped. A guard plate 113 covers the clamp assembly 100 on the side thereof adjacent the roller 36d as shown in Fig. 2.

A trip mechanism 114 is also mounted on the bar 88 and includes a lever 116 pivoted to a bracket 115 by a bolt 118. Fixed to the lever 116 is a C-shaped flange member 120 carrying a pin 122. A spring 124 is connected between the lever 116 and the bracket 115 to urge the lever 116 and pin 122 into the trip position shown in solid lines in Fig. 3 In this trip position, the flange member 120 abuts a washer 126 provided on a control rod 128 which extends through the flange member 120. One end of the control rod 128 is threaded and includes a nut 130 for adjusting the location of the washer 126. The other end of the control rod 128 is connected to a bracket 132 which is attached to the end portion 104b of the jaw member 104 of the clamp assembly 100.

A cam plate 134 is mounted on one end of the arm 56 for engagement with the pin 122 of the trip mechanism 114 during pivoting movement of the arm 56. When the arm 56 is moving from the position shown in Fig. 2 in a direction toward the sidewall 11b of the base frame portion 10, the cam plate 134 will strike the pin 122 and move the pin 122 into the actuating position indicated in phantom at 122' in Fig. 3. This causes the control rod 128 to be pulled toward the sidewall 11a of the base frame portion 10 (toward the left as viewed in Figs. 3 and 4), thereby shifting the jaw member 104 of the clamp assembly 100 to its open position shown in phantom in Fig. 4 to release the twine T. As the arm 56 continues to move toward the sidewall 11b of the base frame portion 10, the spring 106 returns the jaw member 104 of the clamp assembly 100 to its closed position shown in solid lines in Fig. 4 and the pin 122 is returned to its trip position shown in solid lines in Fig. 3 Subsequently when the arm 56 is moving in a direction toward the sidewall 11a of the base frame portion 10, the cam plate 134 will again strike the pin 122 and move it into the non-actuating position indicated in phantom at 122" in Fig. 3. This, however, causes no movement of the control rod 128 since the flange member 120 is moved out of engagement with the washer 126. The jaw member 104 of the clamp assembly 100 remains in its closed position and the spring 124 returns the pin 122 to its trip position as the arm 56 continues to move toward the sidewall 11a of the base frame portion 10.

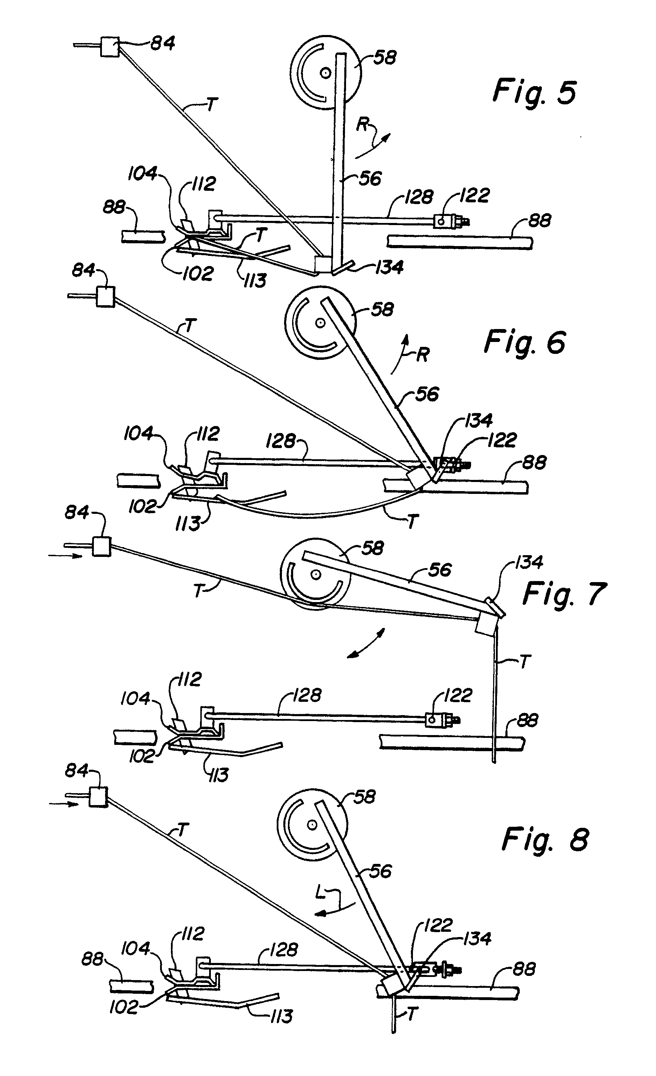

The operation of the twine wrapping apparatus 52 will now be described with particular reference to Fig. 5-11. During the formation of a bale in the round baler 1, the arm 56 will remain in the rest position shown in Fig. 5 and the twine T will be clamped between the jaw members 102, 104 of the clamp assembly 100, thus preventing the twine T from entering the bale chamber prematurely. When a bale B as seen in Fig. 1 is ready to be wrapped with twine, the switch (not shown) connecting the power source (also not shown) and the electric motor 62 is closed thereby activating the electric motor 62 and causing pivoting movement of the arm 56 in the direction indicated by the arrow R in Fig. 5, i.e. in the direction away from the clamp assembly 100. During this initial movement of the twine dispensing arm 56, the free end of the twine T remains clamped in the clamp assembly 100 whereby a length of twine T is drawn between said assembly and the twine dispensing arm 56 which is sufficient for wrapping to commence without hesitation as soon as the free end is released. To this end the clamp assembly 100 and the trip assembly 114 are spaced apart across the width of the baling machine over a substantial distance. Preferably, the clamp assembly 100 is provided proximate to one side wall 11a of the baling machine and the trip assembly 114 is provided proximate to the other side wall 11b. It should be noted that the twine dispensing member 56 has its rest or home position inbetween the clamp assembly 100 and the trip assembly 114 and preferably generally in the middle thereof.

As the twine arm 56 approaches the position shown in Fig. 6, the cam plate 134 engages and moves the pin 122 into its actuating position (122' in Fig. 3) which causes the jaw member 104 of the clamp assembly 100 to be shifted to its open position via the control rod 128. The twine T is released from the clamp assembly 100 and falls through a gap 35 between the rollers 36d and 36e. A shield and guide plate 136, seen in Figs. 1 and 2, extends transversely of and is mounted on the base frame 10 to insure that the twine T falls through the gap 35. The twine T is guided into the gap 35 by the bar 88 where it is caught between the roller 36d and the bale B which are rotating in opposite directions as indicated in Fig. 1. It should be noted that the bar 88 and the guide plate 136 together define a further gap which generally overlies the gap 35 between the rollers 36d and 36e and which is operable to funnel the free end of the twine T, after it is released by the clamp assembly 100, towards the bale chamber through the aforementioned gap 35. More specifically, the guide plate 136 preferably is positioned relative to the roller 36d so as to guide the twine T to the sides thereof which, in operation, is moving inwardly towards the bale chamber. This assists the twine T, once engaged by the roller 36d, to positively enter the bale chamber.

As soon as the free end of the twine T is caught between the roller 36d and the bale B in the bale chamber, wrapping is started by the rotational movement of the bale B in the bale chamber. The guide 88 is positioned relative to the roller 36e so as to prevent the twine T to engage said roller 36e as it enters into the bale chamber through said gap 35. Such engagement indeed would oppose to the twine T entering the bale chamber and thus should be avoided. The reason therefore is that, in operation, the side of the roller 36e facing the gap 35 is moving in an outward direction away from the bale chamber.

After wrapping has started, the arm 56 still continues to move in the direction away from the clamp assembly 100. While that the arm 56 moves toward the position shown in Fig. 7, twine T is dispensed from the supply box 54, fed through the gap 35 and wrapped around the bale B in a spiral pattern. The bar 88 guides the twine T into the gap 35 to provide proper spacing of the twine T on the bale B. When the arm 56 reaches the position of Fig. 7, its direction of movement is reversed and it starts its return movement in the direction indicated by the arrow L in Fig. 8. As the arm 56 approaches the position shown in Fig. 8, the cam plate 134 engages and moves the pin 122 into its nonactuating position (122" in Fig. 3) which causes no movement of the control rod 128 or jaw member 104 of the clamp assembly 100. The arm 56 continues to dispense twine T from the supply box 54 through the gap 35 where it is wrapped around the bale B. The twine T continues to be guided into the gap 35 by bar 88 to insure proper spacing of the twine T on the bale B.

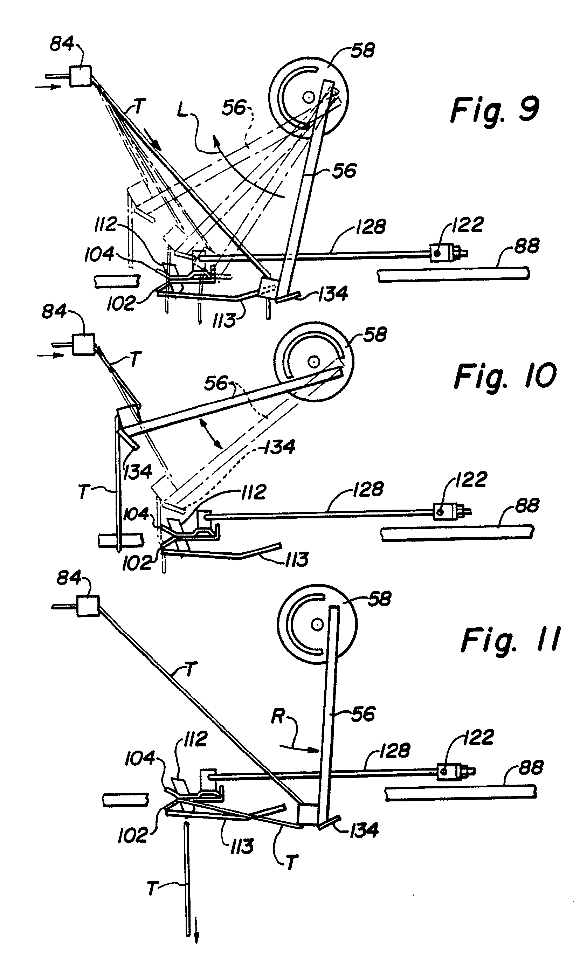

Referring to Fig. 9, the arm 56 keeps moving in the direction indicated by the arrow L. As the arm 56 moves past the clamp assembly 100, the twine T rides on the guard plate 113 to prevent it from getting tangled up in the clamp assembly 100. When the arm 56 reaches the position of Fig. 10, its direction of movement is reversed again and it starts moving in the direction indicated by arrow R in Fig. 11. As the arm 56 approaches the position shown in phantom in Fig. 10, the twine T is received in the mouth 105 formed between the jaw members 102, 104 of the clamp assembly 100. The arm continues to move in the direction indicated by arrow R in Fig. 11 thereby pulling the twine T into the clamp assembly 100 where it is firmly clamped between the jaw members 102, 104 with the twine T extending from the clamp assembly 100 into the bale chamber engaging the knife 112. The continued pull of the bale B on the twine T ultimately causes the knife 112 to sever said twine whereafter the cut off end disappears into the bale chamber and the other end remains clamped in the clamp assembly 100 ready for starting the wrapping of a next bale to be formed in the bale chamber. The arm 56 continues moving until it returns to the rest position of Fig. 5 whereupon it is stopped by opening the switch (not shown) to deactivate the electric motor 62. During this final movement of the twine dispensing arm 56 in the direction away from the clamp assembly 100 and until this rest position of Figure 5 is reached, an initial length of twine T already is drawn between the arm 56 and the clamp assembly 100 in preparation for the next wrapping cycle. The arm 56 remains in this rest position until another bale is ready to be wrapped.

From what precedes it thus will be noted that the guide 88 and the shield 136 are separate from the twine dispensing arm 56 and are stationary.

It will be understood that the twine wrapping apparatus of the present invention may also be used on a round baler where conveyor belts instead of rollers constitute the conveying members of the bale forming mechanism. Such a round baler is disclosed in U.S. Patent No. 4,119,026. The twine wrapping apparatus of the present invention even could advantageously be combined with an expandable chamber type baler using two bale forming apron chains or belts such as disclosed in US 4,121,513. In this combination the twine wrapper should be installed at the top of the bale chamber where both apron chains or belts define a gap therebetween.

Also, while the wrapper of the present invention preferably is provided generally at the top of the bale chamber, it very well is conceivable that said twine wrapper is installed at other positions. Furthermore, the gap between the bale forming means in the proximity of which the twine wrapper of the instant invention is provided and through which twine is guided into the bale chamber, also may form the bale chamber crop inlet opening although preferably said crop inlet opening is separate from said gap.

Finally, the electric motor 62 may be replaced by a hydraulic motor, and automatic controls may be used to operate the electric motor 62 or the hydraulic motor.

## Claims

1. A roll baling machine (1) comprising :
   - a pair of bale forming means (36d, 36e) defining at least in part a bale forming chamber and operable to at least contribute in forming crop material into roll bales (B); said bale forming means (36d, 36e) further also defining a generally transversely extending gap (35) therebetween; and
   - an apparatus (52) for wrapping roll bales (B) with twine (T); said apparatus (52) including a dispensing member (56) mounted for movement generally across the width of said gap to dispense twine (T) therethrough for applying it onto a bale (B) in the bale chamber, and
   characterized in that
   a stationary guide means (88) is disposed to guide the twine (T)
   dispensed by the dispensing means (56) into the gap (35) between said pair of bale forming means (36d, 36e).

2. A baling machine according to claim 1, characterized in that the stationary guide means (88) is separate from the twine dispensing member (56).

3. A baling machine according to claim 2, characterized in that the twine dispensing member (56) is mounted for pivotal movement generally in the vicinity of the stationary guide means (88) which extends generally parallel to said transverse gap (35) and generally in the vicinity and across the width thereof.

4. A baling machine according to any of the preceding claims, characterized in that the stationary guide means comprises a bar (88) connected between opposed side walls (11a, 11b) of the machine.

5. A baling machine according to any of the claims 1 to 3 characterized in that the stationary guide means comprises first and second generally parallel bars (88, 136) connected between opposed side walls (11a, 11b) of the machine; said first and second bars (88, 136) being spaced apart to define a further gap therebetween which generally overlies said gap (35) between said pair of bale forming means (36d, 36e), and the arrangement being such that twine (T) is dispensed through said further gap while engaging one (88) of said bars (88, 136) for being guided thereby through said gap (35) between said bale forming means (36d, 36e).

6. A baling machine according to any of the preceding claims characterized in that the twine dispensing member comprises an arm (56) which is pivotally mounted at one end on a frame portion (61) of the baling machine and which comprises a twine dispensing end opposite to said one end; said arm (56) being drivingly coupled to an actuator means (62) which is operable to pivot the arm (56) back-and-forth so as to move its twine dispensing end along an arcuate path generally in the vicinity of and across the width of said guide means (88).

7. A baling machine according to any of the preceding claims characterized in that the gap (35) between said pair of bale forming means (36d, 36e) through which twine (T) is applied upon a bale (B) in the bale chamber also forms the crop inlet opening to said bale chamber.

8. A baling machine according to any of the claims 1 to 6, characterized in that the gap (35) between said pair of bale forming means (36d, 36e) through which twine (T) is applied upon a bale (B) in the bale chamber is separate from the crop inlet opening through which crop material is fed into the bale chamber.

9. A baling machine according to claim 8, characterized in that the bale forming means defining said gap (35) are formed by a pair of rollers (36d, 36e) which form part of a plurality of bale forming rollers (36a-f; 38a,b; 44a-f) which together define the bale forming chamber and are operable to form crop material into roll bales (B); said pair of rollers (36d, 36e) defining said gap (35) being positioned generally in the upper half of the bale forming chamber.

10. A baling machine according to claim 9 characterized in that :
    - it comprises a generally forward base frame portion (10) supported by wheels (12) and a generally rearward auxiliary frame (14) pivotally connected to said base frame portion (10); and
    - the pair of rollers (36d, 36e) defining said gap (35) and the twine dispensing member (56) together with the stationary guide means (88) associated therewith are mounted on said base frame portion (10) on the upper half thereof.

11. A baling machine according to claim 9 or 10 when appended to claim 4 or 5 characterized in that the stationary guide bar (88) extends generally parallel to the longitudinal axes of the rollers (36d, 36e) defining said gap (35).

12. A baling machine according to any of the preceding claims, characterized in that it further also comprises :
    - clamp means (100) for clamping the twine (T) when the twine dispensing member (56) is in a rest position; and
    - trip means (114) connected to the clamp means (100); said trip means (114) being actuated by engagement with the dispensing member (56) during its dispensing movement to release the twine (T) from said clamp means (100).

13. A baling machine according to claim 12 characterized in that :
    - the clamp means (100) and the trip means (114) are spaced apart across the width of the baling machine; and
    - the twine dispensing member (56) has its rest position inbetween the clamp means (100) and the trip means (114) and is movable initially in a direction away from the clamp means (100) and towards and past the trip means (114) and subsequently in the opposite direction across substantially the full width of the baling machine; the arrangement is such that, during the initial movement of the dispensing member (56), the clamp means (100) holds the twine (T) so as to draw a length of twine (T) between said clamp means (100) and the dispensing member (56) whereafter, and as the dispensing member (56) engages the trip means (114), said twine (T) is released from the clamp means (100) so as to permit said twine (T) to commence wrapping around a bale (B) in the bale chamber; said wrapping being continued during the return movement of the twine dispensing member (56).

14. A baling machine according to claim 13 characterized in that :
    - during said return movement, the dispensing member (56) is movable past the clamp means (100); a guard plate (113) being associated with the clamp means (100) to prevent the twine (T) from getting tangled up in the clamp means (100) during the return movement; and
- the twine dispensing means (56) is finally movable back to the rest position in the direction of the initial movement; the arrangement being such that, during said final movement, the twine (T) is snapped in the clamp means (100).

15. A baling machine according to claim 14 characterized in that the the clamp means (100) is provided generally proximate to one transverse side (11a) of the baling machine and the trip means (114) is provided generally in the vicinity of the opposite transverse side (11b) of the baling machine; the trip means (114) and the clamp means (100) being interconnected by a control rod (128).

16. A baling machine according to any of the claims 13 to 15, characterized in that :
- the clamp means (100) is movable between a closed position to clamp the twine (T) and an open position to release the twine (T); and
- the trip means (114) is movable from a trip position in which the clamp means (100) is in the closed position to an actuating position upon engagement with the twine dispensing member (56) during its initial movement away from the clamp means (100) to move said clamp means (100) from said closed position to said open position.

17. A baling machine according to claim 16, characterized in that :
- the trip means (114) is movable from the trip position in which the clamp means (100) is in the closed position to a non-actuating position upon engagement with the twine dispensing member (56) during its return movement in the direction toward the clamp means (100); the coupling of the trip means (114) to the clamp means (100) including a one-way lost motion arrangement so as to permit said movement of the trip means (114) from its trip position to its non-actuating position without causing actuation of the clamp means (100).

18. A baling machine according to claim 16 or 17 characterized in that spring means (124) are coupled to the trip means (114) which resiliently urge the trip means (114) towards the trip position and which, upon engagement of the trip means (114) with the dispensing member (56), permit movement of the trip means (114) away from its trip position.

19. A baling machine according to any of the claims 16 to 18 when appended to claim 15, characterized in that :
- the clamp means (100) comprises a movable jaw member (104) which is resiliently movable between a clamping position engaging a fixed jaw member (102) and a releasing position away from the fixed jaw member (102); and
- the trip means (114) comprises a pivot pin (122) movable between a trip position generally in the path of the dispensing member (56) and an actuating, respectively a non-actuating position generally retracted from said path.

20. A baling machine according to claim 19 characterized in that the twine dispensing member (56) comprises a cam plate (134) for engaging and actuating said pivot pin (122) of the trip means (114) as the dispensing member (56) moves past said trip means (114).

21. A baling machine according to any of the claims 15 to 20 when appended to claim 14 characterized in that it further also comprises knife means (112) located adjacent said clamp means (100) for severing the twine (T) dispensed by said twine dispensing member (56) substantially at the moment that the twine (T) is snapped in the clamp means (100) at the end of wrapping a bale (B) in the bale chamber.

**Revendications**

1. Machine de ramassage-pressage à balles cylindriques (1) comportant:
- deux moyens de formage de balles (36d, 36e) qui définissent au moins en partie une chambre de formage de balles et sont aptes à opérer pour au moins contribuer à transformer des produits de récolte en balles cylindriques (B); lesdits moyens de formage de balles (36d, 36e) définissant également entre eux un espace (35) qui s'étend, d'une manière générale, transversalement; et
- un appareil (52) pour enrouler une ficelle (T) autour des balles cylindriques (B); ledit appareil (52) comportant un organe distributeur (56) monté en vue d'effectuer un déplacement, d'une manière générale, transversalement à la largeur dudit espace pour délivrer la ficelle (T) à travers celui-ci, en vue de l'appliquer sur une balle (B) présente dans la chambre à balles, et

caractérisée en ce que:

des moyens de guidage fixes (88) sont disposés de manière à guider la ficelle (T) délivrée par les moyens distributeurs (56), jusque dans l'espace (35) défini entre lesdits deux moyens de formage de balles (36d, 36e).

2. Machine de ramassage-pressage selon la revendication 1, caractérisée en ce que les moyens de guidage fixes (88) sont séparés de l'organe distributeur de ficelle (56).

3. Machine de ramassage-pressage selon la revendication 2, caractérisée en ce que l'organe distributeur de ficelle (56) est monté en vue d'effectuer un mouvement de pivotement, d'une manière générale, à proximité des moyens de guidage fixes (88) qui s'étendent, dans l'ensemble, parallèlement audit espace transversal (35) et sensiblement à proximité de celui-ci et transversalement à sa largeur.

4. Machine de ramassage-pressage selon l'une quelconque des revendications précédentes, caractérisée en ce que les moyens de guidage fixes comportent une barre (88) montée entre des parois latérales opposées (11a, 11b) de la machine.

5. Machine de ramassage-pressage selon l'une quelconque des revendications 1 à 3, caractérisée en ce que les moyens de guidage fixes comportent des première et seconde barres sensiblement parallèles (88, 136) montées entre des parois latérales opposées (11a, 11b) de la machine; lesdites première et seconde barres (88, 136) étant espacées l'une de l'autre pour définir entre elles un second espace qui, d'une manière générale, surplombe ledit espace (35) défini entre lesdits deux moyens de formage de balles (36d, 36e), et la conception étant telle qu'une ficelle (T) est délivrée à travers ledit second espace tout en venant en prise avec l'une (88) desdites barres (88, 136), en vue d'être guidée par celle-ci à travers ledit espace (35) défini entre lesdits moyens de formage de balles (36d, 36e).

6. Machine de ramassage-pressage selon l'une quelconque des revendications précédentes, caractérisée en ce que l'organe distributeur de ficelle comporte un bras (56) monté d'une manière pivotante, au niveau de sa première extrémité, sur une partie de châssis (61) de la machine de ramassage-pressage, et pourvu d'une seconde extrémité distributrice de ficelle opposée à ladite première extrémité; ledit bras (56) étant accouplé dans une relation d'entraînement avec des moyens d'actionnement (62) aptes à opérer pour faire pivoter le bras (56) suivant un mouvement de va-et-vient, de manière à déplacer son extrémité distributrice de ficelle le long d'une trajectoire arquée, sensiblement à proximité desdits moyens de guidage (88) et transversalement à la largeur de ceux-ci.

7. Machine de ramassage-pressage selon l'une quelconque des revendications précédentes, caractérisée en ce que l'espace (35) défini entre lesdits deux moyens de formage de balles (36d, 36e) et à travers lequel une ficelle (T) est appliquée sur une balle (B) présente dans la chambre à balles, forme également l'orifice d'entrée de récolte dans ladite chambre à balles.

8. Machine de ramassage-pressage selon l'une quelconque des revendications 1 à 6, caractérisée en ce que l'espace (35) défini entre lesdits deux moyens de formage de balles (36d, 36e) et à travers lequel une ficelle (T) est appliquée sur une balle (B) présente dans la chambre à balles, est distinct de l'orifice d'entrée de récolte à travers lequel des produits de récolte sont chargés dans la chambre à balles.

9. Machine de ramassage-pressage selon la revendication 8, caractérisée en ce que les moyens de formage de balles qui définissent ledit espace (35) sont constitués par deux rouleaux (36d, 36e) faisant partie de plusieurs rouleaux de formage de balles (36a-f; 38a,b; 44a-f) qui définissent ensemble la chambre de formage de balles et sont aptes à opérer pour transformer des produits de récolte en balles cylindriques (B); lesdits deux rouleaux (36d, 36e) qui définissent ledit espace (35) étant positionnés, d'une manière générale, dans la moitié supérieure de la chambre de formage de balles.

10. Machine de ramassage-pressage selon la revendication 9, caractérisée en ce que:
   - elle comporte une partie formant châssis de base (10) située sensiblement vers l'avant et supportée par des roues (12), et un châssis auxiliaire (14) situé sensiblement vers l'arrière et accouplé d'une manière pivotante avec ladite partie formant châssis de base (10); et

- les deux rouleaux (36d, 36e) qui définissent ledit espace (35) et l'organe distributeur de ficelle (56) ainsi que les moyens de guidage fixes (88) associés à ceux-ci, sont montés sur ladite partie formant châssis de base (10), sur la moitié supérieure de celle-ci.

11. Machine de ramassage-pressage selon la revendication 9 ou 10, lorsqu'elles sont dépendantes de la revendication 4 ou 5, caractérisée en ce que la barre de guidage fixe (88) s'étend, d'une manière générale, parallèlement aux axes longitudinaux des rouleaux (36d, 36e) qui définissent ledit espace (35).

12. Machine de ramassage-pressage selon l'une quelconque des revendications précédentes, caractérisée en ce qu'elle comporte également:
    - des moyens de serrage (100) destinés à serrer la ficelle (T), lorsque l'organe distributeur de ficelle (56) est dans une position de repos; et
    - des moyens déclencheurs (114) reliés aux moyens de serrage (100); lesdits moyens déclencheurs (114) étant actionnés par un contact avec l'organe distributeur (56) pendant son mouvement de distribution, pour libérer la ficelle (T) desdits moyens de serrage (100).

13. Machine de ramassage-pressage selon la revendication 12, caractérisée en ce que:
    - les moyens de serrage (100) et les moyens déclencheurs (114) sont espacés les une des autres transversalement à la largeur de la machine de ramassage-pressage; et
    - l'organe distributeur de ficelle (56) a sa position de repos située entre les moyens de serrage (100) et les moyens déclencheurs (114) et est mobile, initialement, dans une direction orientée à distance des moyens de serrage (100), et vers et au-delà des moyens déclencheurs (114) et, ultérieurement, dans la direction opposée, transversalement à sensiblement la totalité de la largeur de la machine de ramassage-pressage; la conception étant telle que, pendant le déplacement initial de l'organe distributeur (56), les moyens de serrage (100) tiennent la ficelle (T) afin de tirer une longueur de ficelle (T) entre lesdits moyens de serrage (100) et l'organe distributeur (56), après quoi, et lorsque l'organe distributeur (56) vient en contact avec les moyens déclencheurs (114), ladite ficelle (T) est libérée des moyens de serrage (100), de façon à pouvoir commencer à s'enrouler autour d'une balle (B) présente dans la chambre à balles; ledit enroulement étant poursuivi pendant le mouvement de retour de l'organe distributeur de ficelle (56).

14. Machine de ramassage-pressage selon la revendication 13, caractérisée en ce que:
    - pendant ledit mouvement de retour, l'organe distributeur (56) peut se déplacer au-delà des moyens de serrage (100); une plaque protectrice (113) étant associée aux moyens de serrage (100) pour éviter que la ficelle (T) ne s'emmêle dans les moyens de serrage (100) pendant le mouvement de retour; et
    - les moyens distributeurs de ficelle (56) sont finalement aptes à revenir dans la position de repos, dans la direction du déplacement initial; la conception étant telle que, pendant ledit déplacement final, la ficelle (T) est saisie dans les moyens de serrage (100).

15. Machine de ramassage-pressage selon la revendication 14, caractérisée en ce que les moyens de serrage (100) sont prévus, d'une manière générale, à proximité de l'un (11a) des côtés transversaux de la machine de ramassage-pressage, tandis que les moyens déclencheurs (114) sont prévus, d'une manière générale, au voisinage du côté transversal opposé (11b) de la machine de ramassage-pressage; les moyens déclencheurs (114) et les moyens de serrage (100) étant reliés entre eux par une tige de commande (128).

16. Machine de ramassage-pressage selon l'une quelconque des revendications 13 à 15, caractérisée en ce que:
    - les moyens de serrage (100) sont mobiles entre une position fermée pour serrer la ficelle (T) et une position ouverte pour relâcher la ficelle (T); et
    - les moyens déclencheurs (114) sont mobiles depuis une position de déclenchement dans laquelle les moyens de serrage (100) occupent la position fermée, dans une position d'actionnement lors d'un contact avec l'organe distributeur de ficelle (56) pendant son déplacement initial à distance des moyens de serrage (100), afin de déplacer lesdits moyens de serrage (100) de ladite position fermée dans ladite position ouverte.

17. Machine de ramassage-pressage selon la revendication 16, caractérisée en ce que:
- les moyens déclencheurs (114) sont mobiles depuis la position de déclenchement dans laquelle les moyens de serrage (100) occupent la position fermée, dans une position de non actionnement lors d'un contact avec l'organe distributeur de ficelle (56) pendant son mouvement de retour dans la direction orientée vers les moyens de serrage (100); l'accouplement des moyens déclencheurs (114) avec les moyens de serrage (100) comportant un dispositif à course morte unidirectionnel, afin de permettre ledit déplacement des moyens déclencheurs (114) de leur position de déclenchement dans leur position de non actionnement, sans provoquer un actionnement des moyens de serrage (100).

18. Machine de ramassage-pressage selon la revendication 16 ou 17, caractérisée en ce qu'il est prévu, accouplés avec les moyens déclencheurs (114), des moyens élastiques (124) qui sollicitent élastiquement les moyens déclencheurs (114) en direction de la position de déclenchement et qui, lors d'un contact des moyens déclencheurs (114) avec l'organe distributeur (56), permettent un déplacement des moyens déclencheurs (114) à distance de leur position de déclenchement.

19. Machine de ramassage-pressage selon l'une quelconque des revendications 16 à 18, lorsqu'elles sont dépendantes de la revendication 15, caractérisée en ce que:
- les moyens de serrage (100) comportent un élément de mâchoire mobile (104) apte à être déplacé d'une manière élastique entre une position de serrage en contact avec un élément de mâchoire fixe (102) et une position de relâchement à distance de l'élément de mâchoire fixe (102); et
- les moyens déclencheurs (114) comportent un axe de pivotement (122) mobile entre une position de déclenchement située, d'une manière générale, dans la trajectoire de l'organe distributeur (56), et une position d'actionnement, respectivement de non actionnement, sensiblement en retrait par rapport à ladite trajectoire.

20. Machine de ramassage-pressage selon la revendication 19, caractérisée en ce que l'organe distributeur de ficelle (56) comporte une plaque formant came (134) destinée à venir en contact avec ledit axe de pivotement (122) des moyens déclencheurs (114) et à actionner celui-ci, lorsque l'organe distributeur (56) se déplace au-delà desdits moyens déclencheurs (114).

21. Machine de ramassage-pressage selon l'une quelconque des revendications 15 à 20, lorsqu'elles sont dépendantes de la revendication 14, caractérisée en ce qu'elle comporte également des moyens formant couteau (112) situés à proximité desdits moyens de serrage (100), afin de couper la ficelle (T) délivrée par ledit organe distributeur de ficelle (56), sensiblement au moment où la ficelle (T) est saisie dans les moyens de serrage (100), à la fin du ficelage d'une balle (B) présente dans la chambre à balles.

**Patentansprüche**

1. Rundballenmaschine (1) mit:
- zwei Rundballen-Formungseinrichtungen (36d,36e), die zumindestens teilweise eine Ballenformungskammer umgrenzen und so betätigbar sind, daß sie zumindestens zur Formung von Erntematerial zu Rundballen (B) beitragen, wobei die Ballenformungseinrichtungen (36d,36e) weiterhin einen sich allgemein in Querrichtung erstreckenden Spalt (35) zwischen sich ausbilden; und
- einer Vorrichtung (52) zum Umwickeln der Rundballen (B) mit Bindegarn (T), wobei die Vorrichtung (52) ein Abgabeteil (56) einschließt, das für eine Bewegung allgemein über die Weite des Spaltes befestigt ist, um Bindegarn durch den Spalt abzugeben und es auf einen Rundballen (B) in der Ballenkammer aufzubringen,
dadurch **gekennzeichnet,** daß eine stationäre Führungseinrichtung (88) zur Führung des von den Abgabeeinrichtungen (56) abgegebenen Bindegarns (T) in den Spalt (35) zwischen den beiden Ballenformungseinrichtungen (36d,36e) angeordnet ist.

2. Rundballenmaschine nach Anspruch 1, dadurch **gekennzeichnet,** daß die stationäre Führungseinrichtung (88) von dem Bindegarn-Abgabeteil (56) getrennt ist.

3. Rundballenmaschine nach Anspruch 2, dadurch **gekennzeichnet,** daß das Bindegarn-Abgabeteil (56) für eine Schwenkbewegung allgemein in der Nähe der stationären Führungseinrichtung (88) befestigt ist, die sich allgemein parallel zu dem querverlaufenden Spalt (35) und allgemein in dessen Nähe und über dessen Weite erstreckt.

4. Rundballenmaschine nach einem der vorhergehenden Ansprüche,
dadurch **gekennzeichnet**, daß die stationäre Führungseinrichtung eine Stange (88) umfaßt, die zwischen gegenüberliegenden Seitenwänden (11a,11b) der Maschine angeschlossen ist.

5. Rundballenmaschine nach einem der Ansprüche 1 bis 3,
dadurch **gekennzeichnet,** daß die stationäre Führungseinrichtung erste und zweite allgemein parallele Stangen (88,136) aufweist, die zwischen gegenüberliegenden Seitenwänden (11a,11b) der Maschine angeschlossen sind, daß die ersten und zweiten Stangen (88,136) mit Abstand voneinander angeordnet sind, um einen weiteren Spalt zwischen sich zu bilden, der allgemein über dem Spalt (35) zwischen den beiden Ballenformungseinrichtungen (36d,36e) liegt, und daß die Anordnung derart ist, daß das Bindegarn (T) durch den weiteren Spalt abgegeben wird, während es mit einer (88) der Stangen (88,136) in Eingriff steht, um von dieser durch den Spalt (35) zwischen den Ballenformungseinrichtungen (36d,36e) geführt zu werden.

6. Rundballenmaschine nach einem der vorhergehenden Ansprüche,
dadurch **gekennzeichnet,** daß das Bindegarn-Abgabeteil einen Arm (56) umfaßt, der an einem Ende schwenkbar an einem Rahmenteil (61) der Rundballenmaschine befestigt ist und der ein Bindegarn-Abgabeende gegenüberliegend zu dem einen Ende aufweist, daß der Arm (56) antriebsmäßig mit einer Betätigungseinrichtung (62) gekoppelt ist, die zum Hin-und Herverschwenken des Arms (56) derart betätigbar ist, daß das Bindegarn-Abgabeende des Arms entlang einer bogenförmigen Bahn allgemein in der Nähe und über die Weite der Führungseinrichtungen (88) bewegt wird.

7. Rundballenmaschine nach einem der vorhergehenden Ansprüche,
dadurch **gekennzeichnet,** daß der Spalt (35) zwischen den beiden Ballenformungseinrichtungen (36d,36e), durch den hindurch Bindegarn (T) auf einen Rundballen (B) in der Ballenkammer aufgebracht wird, weiterhin die Erntematerial-Einlaßöffnung zu der Ballenkammer bildet.

8. Rundballenmaschine nach einem der Ansprüche 1 bis 6,
dadurch **gekennzeichnet,** daß der Spalt (35) zwischen den beiden Ballenformungseinrichtungen (36d,36e), durch den hindurch Bindegarn (T) auf einen Ballen (B) in der Ballenkammer aufgebracht wird, von der Erntematerial-Einlaßöffnung getrennt ist, durch die hindurch Erntematerial in die Ballenkammer eingeführt wird.

9. Rundballenmaschine nach Anspruch 8,
dadurch **gekennzeichnet,** daß die den Spalt (35) bildenden Ballenformungseinrichtungen durch zwei Walzen (36d, 36e) gebildet sind, die einen Teil einer Vielzahl von Ballenformungswlazen (36a-f;38a,b;44a-f) bilden, die zusammen die Ballenformungskammer bilden und betätigbar sind, um Erntematerial zu Rundballen (B) zu formen, wobei die beiden Walzen (36d,36e), die den Spalt (35) bilden, allgemein in der oberen Hälfte der Ballenformungskammer angeordnet sind.

10. Rundballenmaschine nach Anspruch 9,
dadurch **gekennzeichnet,** daß
   - sie einen allgemein vorderen Grundrahmenteil (10), der von Rädern (12) getragen wird, und einen allgemein hinteren Hilfsrahmen (14) umfaßt, der schwenkbar mit dem Grundrahmenteil (10) verbunden ist, und
   - die beiden den Spalt (35) bildenden Walzen (36d,36e) und das Bindegarnabgabeteil (56) zusammen mit der diesem zugeordneten stationären Führungseinrichtung (88) auf dem Grundrahmenteil (10) auf dessen oberer Hälfte befestigt sind.

11. Rundballenmaschine nach Anspruch 9 oder 10 bei Rückbeziehung auf Anspruch 4 oder 5,
dadurch **gekennzeichnet,** daß sich die stationäre Führungsstange (88) allgemein parallel zu den Längsachsen der den Spalt (35) bildenden Walzen (36d,36e) erstreckt.

12. Rundballenmaschine nach einem der vorhergehenden Ansprüche,
dadurch **gekennzeichnet,** daß sie weiterhin folgende Teile umfaßt:
   - eine Klemmeinrichtung (100) zum Festklemmen des Bindegarns (T), wenn sich das Bindegarn-Abgabeteil (56) in einer Ruhestellung befindet, und
   - eine Auslöseeinrichtung (114), die mit der Klemmeinrichtung (100) verbunden ist und die durch den Eingriff mit dem Abgabeteil (56) während dessen Abgabebewegung betätigt wird, um das Bindegarn (T) aus der Klemmeinrichtung (100) freizugeben.

13. Rundballenmaschine nach Anspruch 12, dadurch **gekennzeichnet**, daß
- die Klemmeinrichtung (100) und die Auslöseeinrichtung (114) mit Abstand voneinander entlang der Breite der Rundballenmaschine angeordnet sind, und
- das Bindgarn-Abgabeteil (56) seine Ruhestellung zwischen der Klemmeinrichtung (100) und der Auslöseeinrichtung (114) aufweist und anfänglich in einer Richtung von der Klemmeinrichtung fort und in Richtung auf die Auslöseeinrichtung (114) und an dieser vorbei und nachfolgend in der entgegengesetzten Richtung im wesentlichen über die volle Breite der Rundballenmaschine beweglich ist, wobei die Anordnung derart ist, daß während der anfänglichen Bewegung des Abgabeteils (56) die Klemmeinrichtung (100) das Bindegarn (T) festhält, so daß eine Länge des Bindegarns (T) zwischen der Klemmeinrichtung (100) und dem Abgabeteil (56) ausgezogen wird, worauf, wenn das Abgabeteil (56) mit der Auslöseeinrichtung (114) in Eingriff kommt, das Bindegarn (T) von der Klemmeinrichtung (100) freigegeben wird, so daß das Bindegarn (T) beginnt, um den Ballen (B) in der Ballenkammer gewickelt zu werden, wobei dieses Umwickeln während der Rückwärtsbewegung des Bindegarn-Abgabeteils (56) fortgesetzt wird.

14. Rundballenmaschine nach Anspruch 13, dadurch **gekennzeichnet, daß**
- während der Rückwärtsbewegung das Abgabeteil (56) an der Klemmeinrichtung (100) vorbei bewegbar ist, wobei eine Schutzplatte (113) der Klemmeinrichtung 8100) zugeordnet ist, um zu verhindern, daß sich das Bindegarn während der Rückwärtsbewegung in der Klemmeinrichtung (100) verfängt, und
- die Bindegarn-Abgabeeinrichtung (56) abschließend zurück zur Ruhestellung in Richtung der Anfangsbewegung beweglich ist, wobei die Anordnung derart ist, daß während der abschließenden Bewegung das Bindegarn (T) in der Klemmeinrichtung (100) eingefangen wird.

15. Rundballenmaschine nach Anspruch 14, dadurch **gekennzeichnet**, daß die Klemmeinrichtung (100) allgemein in der Nähe zu einer Querseite (11a) der Rundballenmaschine vorgesehen ist, während die Auslöseeinrichtung (114) allgemein in der Nähe der gegenüberliegenden Querseite (11b) der Rundballenmaschine angeordnet ist, und daß die Auslöseeinrichtung (114) und die Klemmeinrichtung (100) über eine Steuerstange (128) miteinander verbunden sind.

16. Rundballenmaschine nach einem der Ansprüche 13 bis 15, dadurch **gekennzeichnet**, daß
- die Klemmeinrichtung (100) zwischen einer geschlossenen Stellung zum Einklemmen des Bindegarns (T) und einer offenen Stellung zur Freigabe des Bindegarns (T) beweglich ist, und
- die Auslöseeinrichtung (114) von einer Auslöseposition, in der die Klemmeinrichtung (100) sich in der geschlossenen Stellung befindet, in eine Bestätigungsstellung bei Eingriff mit dem Bindegarn-Abgabeteil (56) während dessen anfänglicher Bewegung von den Klemmeinrichtungen (100) fort beweglich ist, um die Klemmeinrichtung (100) aus der geschlossenen Stellung in die offene Stellung zu bewegen.

17. Rundballenmaschine nach Anspruch 16, dadurch **gekennzeichnet**, daß
- die Auslöseeinrichtung (114) von der Auslösestellung, in der sich die Klemmeinrichtung (100) in der geschlossenen Stellung befindet, auf eine betätigungsfreie Stellung bei Eingriff mit dem Bindegarn-Abgabeteil (56) während dessen Rückwärtsbewegung in Richtung auf die Klemmeinrichtung (100) bewegbar ist, wobei die Kupplung der Auslöseeinrichtung (114) mit der Klemmeinrichtung (100) eine in einer Richtung einen Totgang aufweisende Anordnung einschließt, so daß die Bewegung der Auslöseeinrichtung (114) von ihrer Auslösestellung in ihre betätigungsfreie Position ermöglicht wird, ohne daß eine Betätigung der Klemmeinrichtung hervorgerufen wird.

18. Rundballenmaschine nach Anspruch 16 oder 17, dadurch **gekennzeichnet**, daß mit der Auslöseeinrichtung (114) Federelemente (124) gekoppelt sind, die die Auslöseeinrichtung (114) elastisch in die Auslösestellung vorspannen und die bei Eingriff der Auslöseeinrichtung (114) mit dem Abgabeteil (56) eine Bewegung der Auslöseeinrichtung (114) von ihrer Auslösestellung fort ermöglichen.

19. Rundballenmaschine nach einem der Ansprüche 16 bis 18 bei Rückbeziehung auf Anspruch 15,
dadurch **gekennzeichnet**, daß:
  - die Klemmeinrichtung (100) ein bewegliches Klemmbackenteil (104) umfaßt, das elastisch zwischen einer Klemmstellung, in der es mit einem festen Klemmbackenteil (102) in Eingriff steht, und einer Freigabestellung von dem festen Klemmbackenteil (102) fort beweglich ist, und
  - die Auslöseeinrichtung (114) einen Schwenkstift (122) umfaßt, der zwischen einer Auslösestellung allgemein in der Bahn des Abgabeteils (56) und einer Betätigungs- bzw. einer betätigungsfreien Position beweglich ist, die allgemein aus dieser Bahn heraus bewegt ist.

20. Rundballenmaschine nach Anspruch 19,
dadurch **gekennzeichnet**, daß das Bindegarn-Abgabeteil (56) eine Nockenplatte (134) für den Eingriff mit dem und zur Betätigung des Schwenkzapfens (122) der Auslöseeinrichtung (114) umfaßt, wenn sich das Abgabeteil (56) an der Auslöseeinrichtung (114) vorbei bewegt.

21. Rundballenmaschine nach einem der Ansprüche 15 bis 20 unter Rückbeziehung auf Anspruch 14,
dadurch **gekennzeichnet**, daß sie weiterhin Messereinrichtungen (112) umfaßt, die benachbart zu der Klemmeinrichtung (100) angeordnet sind, um das von dem Bindegarn-Abgabeteil (56) abgegebene Bindegarn (T) im wesentlichen zu dem Zeitpunkt zu durchtrennen, zu dem das Bindegarn (T) in der Klemmeinrichtung (100) am Ende des Umwickelns eines Ballens (B) in der Ballenkammer eingefangen wird.

Fig. 1

EP 0 219 165 B1

Fig. 2

Fig. 3

Fig. 4

Fig. 12

EP 0 219 165 B1

Fig. 5

Fig. 6

Fig. 7

Fig. 8

Fig. 9

Fig. 10

Fig. 11